# EUROPEAN PATENT APPLICATION

(11) **EP 1 093 769 A1**
(43) Date of publication of application: **25.04.2001**
(21) Application number: 00203682.0
(22) Date of filing: 23.10.2000
(51) Int. Cl.: A61C 13/20

(54) **Method and assembly for pressure molding dental elements**

(30) Priority: 21.10.1999 NL 1013369
(71) Applicant: Elephant Dental B.V., 1628 PM Hoorn (NL)
(72) Inventor: van der Zel, Jozef Maria, 1628 TN Hoorn (NL)
(74) Representative: Prins, Adrianus Willem

(57) **Abstract**

A method for pressure molding a dental element, in particular a denture element, comprising the following steps:
- manufacturing at least one model of an element to be formed, of the lost type;
- making a mold from refractory material around the at least one model;
- heating the refractory material, such that the or each model is lost, thereby forming a mold cavity for the or each model, a press opening and one or more connecting channels between the or each mold cavity and the press opening;
- introducing into the press opening pressure molding material which is brought into liquid, at least pressable, condition and is pressed by pressing means into the or each mold cavity;
- wherein the pressing means comprise a stamp with a coefficient of expansion substantially corresponding to that of the refractory material.

## Description

This invention relates to a method for manufacturing dental elements. This invention relates in particular to the pressure molding of dental elements from a pressable material. Such a method is known from practice.

In this known method, which is used under the name of Empress of the firm Ivoclar, a mold having therein a mold cavity of the shape of a dental element to be formed is placed in a press oven. In the oven, the material to be pressed is heated, whereafter using the press integrated into the oven, the pressure molding material is pressed into the mold cavity. Thereafter the element is taken from the oven and cooled, whereafter the element is removed from the mold and finished.

This method provides the advantage that relatively accurate dental elements can be manufactured, from relatively hard materials. Such elements are particularly suitable, for instance, as denture elements. This known method, however, has as a disadvantage that frequently cracks form in the mold, in the stamp of the press and in the dental elements. This seems in any case to be the result of the materials used (in particular aluminum oxide), while moreover expansion of the stamp occurs to an extent which cannot be taken up by the refractory material and the pressure molding material. A further disadvantage of this known method is that for this purpose an oven with an integrated press is to be used. This means that a special apparatus is to be purchased which is relatively costly, while in each case only one mold can be processed at the same time. This means that a relatively long processing time per dental element is necessary, which is costly.

A first object of the invention is to provide a method of the type indicated in the introductory part, in which the disadvantages of the known method are avoided, while maintaining the advantages thereof.

More particularly, an object of the invention is to provide a method whereby cracks in parts of the apparatuses and materials to be used in the method, and in the elements to be formed therewith are avoided.

A further object of the invention is to provide a method of the type described in the introductory part, whereby dental elements can be manufactured, in particular pressure molded, relatively fast, while use can be made of pressing means that can be employed separately from the oven.

To that end, a method according to the invention is characterized by the features according to claim 1.

Surprisingly, it has been found that by making use of pressing means with a press stamp which is introduced into a press opening, while the press stamp is at least partly manufactured from a material having a coefficient of expansion which is at least substantially not greater than that of the refractory material from which the mold is formed, cracks can be prevented. Without wishing to be bound to any theory, it seems that too great a difference in the coefficients of expansion of the materials used has as a consequence that stresses are induced in the refractory material, the pressure molding material and/or the stamp, which cannot be taken up sufficiently, in particular owing to the moduli of elasticity of the materials used being relatively low. The low moduli of elasticity are advantageous with a view to obtaining a dental element formed with sufficient accuracy, having sufficiently flat, at least smooth, surfaces. At least the mold and the stamp should therefore be sufficiently form-retaining, also at elevated temperatures. The stamp and the mold according to the invention should deform at least to a comparable degree upon heating and upon cooling, both as regards the shape and as regards the deformation curve viewed in time. An advantage is then that during cooling no cracking arises in the molding mass. The mold remains substantially free of stress. This prevents the dental element from cracking. What will also be prevented is that cracking arises in pressure molding material left behind in the press opening and feed channels to the mold cavity. Cracking in this residual material could result in cracking of the dental element, which should be prevented.

It is preferred that the stamp has a coefficient of expansion which is approximately equal to that of the refractory material. In addition, it is preferred to use a stamp whose coefficient of expansion is also approximately equal to that of the material of a cuvette in which the mold is formed.

In an advantageous embodiment, the stamp is at least partly manufactured from a material comparable with and preferably the same as the refractory material from which the mold is manufactured. This applies in particular to the part that extends into the press opening during pressing. Stresses in the different parts are thereby prevented still better.

In further elaboration, a method according to the invention is further characterized by the features according to claim 3.

The use of a cuvette manufactured from substantially non-oxidizing material provides the advantage that cracks in the refractory material of the mold, and hence in the dental element, can be prevented still better, since the cuvette gives adequate support upon a change in volume of the interior of the cuvette. For that matter, such a cuvette is also advantageous for use in the known methods.

Particularly suitable as material for the cuvette is a nickel-chromium alloy.

Furthermore, in a further elaboration, a method according to the invention is further characterized by the features according to claim 5.

The use of compressible means on the inside of the cuvette provides the advantage that expansion of the refractory material during heating or upon dimensional changes in the mold and the cuvette during heating and cooling can be taken up by the compressible material, without the occurrence of undesired pressures and stresses in the mold and/or the cuvette. For that matter, such a compressible material is also advantageous for use in the known methods.

As pressure molding material, preferably a material is used which comprises at least glass, at least a glasslike component, such as quartz. This makes a liquid phase of the pressure molding material possible, which is advantageous for pressing the pressure molding mass into the mold cavities. In particular, use is made of a pressure molding mass which contains a glass component as mentioned above and a ceramic component. A dental element is thereby obtained which, due to the pressure molding properties, can be formed particularly accurately and moreover obtains the desired properties for use as a denture element.

In a particularly advantageous embodiment, a method according to the invention is further characterized by the features according to claim 13.

Such a method provides the advantage that at least a part of the stamp, in particular the part that extends into the press opening of the mold, can be removed along with the mold from the pressing means and remains behind in the press opening. Usually, the mold is cut away roundabout the dental element after sufficient hardening has been obtained. To that end, for instance a blasting technique is used.

In the prior art, use is made of an aluminum oxide stamp which is to be cleaned after each use. For that purpose, too, a blasting technique is used, so that the stamp becomes successively smaller, in particular in diameter, so that upon repeated use pressure molding mass can escape between the gap formed between the mold and the stamp. As a result, the quality of the dental element manufactured with the known method is adversely affected, while cleaning of the stamp is made increasingly difficult. In a stamp according to the present invention, this problem does not present itself, since, in principle, every stamp is used only a single time and fits exactly into the press opening. Problems due to wear then do not arise. Moreover, as a consequence, the desired pressure is always achieved and hence a complete filling of the or each mold cavity. The mold and the respective part of the stamp are removed together.

In a further elaboration, a method according to the invention is characterized by the features according to claim 14.

Such a method provides the advantage that molds can be prepared and finished separately from the oven, while moreover permitting the use, separately from the pressing means, of any suitable oven, including an oven which is used for other purposes.

The invention further relates to an assembly for pressure molding dental elements, characterized by the features according to claim 15.

Such an assembly provides the advantage that in a relatively fast and simple manner, at least partly ceramic dental elements can be accurately pressure molded with relatively simple means. Use can then be made of pressing means integrated into an oven, but preferably the assembly comprises pressing means separate from the oven.

The invention further relates to a cuvette for use in pressure molding a dental element, characterized by the features according to claim 22 and to the use of a cuvette manufactured from a material substantially non-oxidizing at a temperature needed for melting ceramic material, in particular a Ni-Cr alloy, for pressure molding an at least partly ceramic dental element in a mold manufactured from a refractory mass in the cuvette.

Further advantageous embodiments of a method and assembly according to the invention are set forth in the further subclaims.

To clarify the invention, exemplary embodiments of a method and assembly according to the invention will be described with reference to the accompanying drawing. In the drawing:
Fig. 1 schematically shows in perspective view a wax model of three dental elements with a connecting part;
Fig. 2 shows in cross-sectional side elevation a cuvette with a portion of a mold cavity and pressing means; and
Fig. 3 schematically shows in partly sectional side view a press with cuvette according to Fig. 2.

In this description, the same or corresponding parts have the same or corresponding reference numerals.

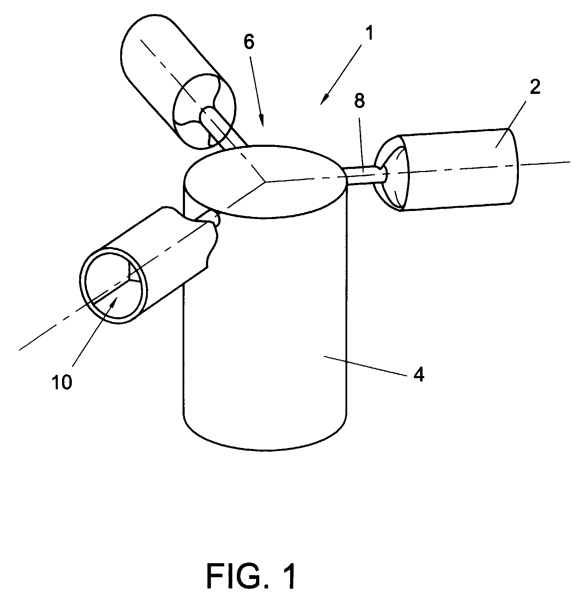

Fig. 1 shows in perspective top view a model 1, comprising three mold cavity-forming parts 2, a substantially cylindrical connecting part 4, and three connecting channel-forming parts 8, extending radially from a point adjacent a first end 6 of the connecting part 4, connecting the mold cavity-forming parts 2 with the connecting part 4. Each mold cavity-forming part 2 has the shape of a dental element to be formed, in particular a denture element such as an inlay, onlay, crown or the like. The mold cavity-forming parts 2 are provided, on the side remote from the connecting part 4, with a cavity 10 through which a denture element to be formed can be fitted in an oral cavity. The model 1 is manufactured from a material having a relatively low melting point, such as wax, so that the material can be readily removed after a mold has been formed around the model 1, as will be elucidated hereinafter.

The model 1 is placed on a base plate (not shown), whereafter a cuvette 12, as will be described in more detail below, is positioned over the model 1 on the same base plate, whereafter the space within the cuvette around the model 1 is filled with a refractory material 14 through an opening 56 in the bottom 54. On the inside of the cuvette 12, a strip of paper 16 is locked as a compression means between the wall 18 of the cuvette 12 and the refractory material 14, functioning as an expansion joint. Next, the cuvette is preheated to a temperature and for a period, such that substantially no gas escapes from the refractory mass anymore, while the model 1 flows away. The refractory mass 14 thereby hardens, while in the refractory material 14 functioning as mold 26 there are left clear the mold cavities 20 having the shape of the mold cavity-forming parts 2, as well as connecting channels 22 formed by the connecting channel-forming parts 8 and a press opening 24, formed by the connecting part 4.

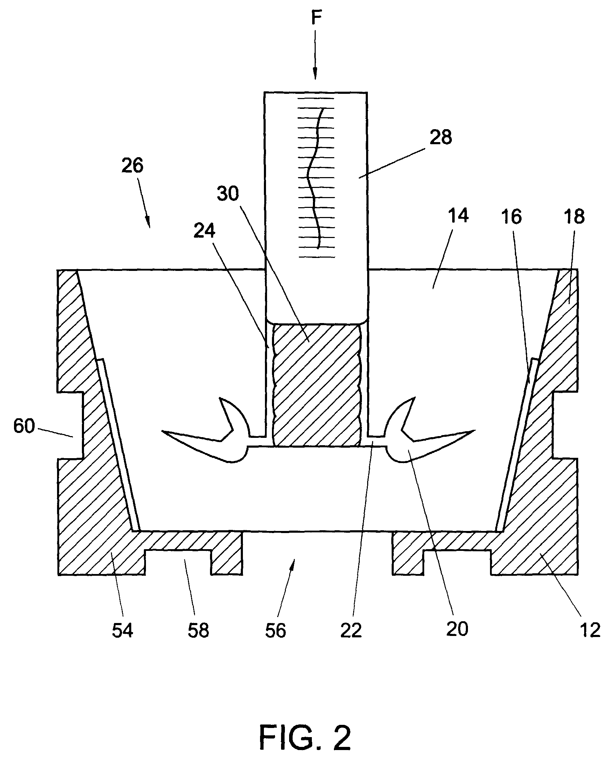

Following this, the cuvette 12 with the mold 26 is inverted into the position shown in Fig. 2. A suitable amount of pressure molding material is provided, for instance in the form of pellets, in the press opening 24, whereafter a stamp 28 is moved into the press opening 24 onto the pressure molding material 30. The stamp 28 has an outer circumference which corresponds to the outer circumference of the connecting part 4 and hence to the inner circumference of the press opening 24, such that the outer wall of the stamp 28 is substantially disposed against the wall of the press opening 24. The stamp 28 is manufactured from a material having a coefficient of expansion substantially corresponding to that of the refractory material 14, so that upon heating and cooling substantially no stresses arise. In the embodiment shown, the stamp 28 is manufactured from the same material as, at least material similar to, the refractory mass 14. The length of the stamp 28 preferably corresponds at least approximately to the depth of the press opening 24.

After the stamp 28 has been placed onto the pressure molding mass 30, the cuvette 12 with the mold 26, the stamp 28 and the pressure molding material 30 is heated to a processing temperature of the pressure molding material 30. This means that such heating is obtained that the pressure molding material 30 can be simply pressed through the connecting channels 22 into the mold cavities 20 so as to fill these completely.

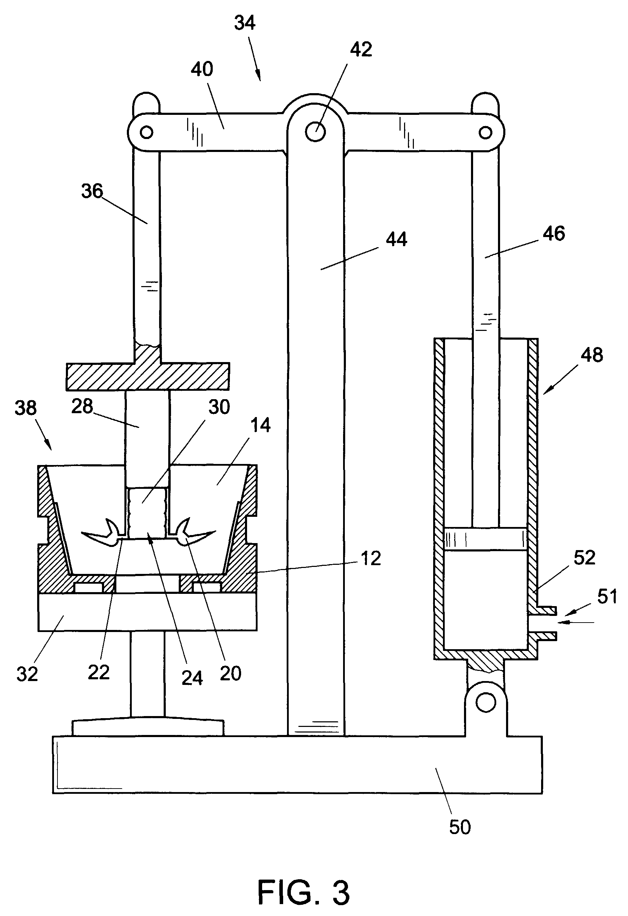

When sufficient heating has been obtained, the cuvette 12 is placed on a press table 32 of a press 34 schematically shown in Fig. 3, under a press arm 36. The stamp 28 then extends to above the upper surface 38 of the refractory material 14. The press arm 36 is coupled to a lever 40 which is pivotably connected with a post 44 through an axis 42. The lever 40 is connected, on the side of the post 44 remote from the press arm 36, with a piston rod 46 of a piston-cylinder assembly 48 which, like the post 44 and the press table 32, is connected with a press base 50. Through an opening 51 in the cylinder 52 of the piston-cylinder assembly 48, for instance compressed air can be introduced, so that by means of the piston rod 46 the lever 40 can be tilted, such that by means of the press arm 36 the stamp 28 can be pressed into the press opening 24, thereby displacing the pressure molding mass 30. As described earlier, the pressure molding mass 30 is pressed through the connecting channels 22 into the mold cavities 20 for forming the desired dental elements. After pressing, the pressure of the piston-cylinder assembly 48 can be removed, allowing the press arm to move back up, whereafter the cuvette 12 can be taken from the press table 32.

After the mold 26 and the pressure molding material 30 have cooled sufficiently, the mold 26 can be taken from the cuvette 12, for instance by pressing against the mold 26 through the opening 56 formed in the bottom 54 of the cuvette 12. The cuvette 12 has a slightly conical interior, tapering outwardly in the direction away from the bottom 54, so that it is readily clearing. After the mold 26 has been taken from the cuvette 12, using a technique suitable for the purpose, the refractory material 14, which includes the stamp 28, around the hardened pressure molding material 30, that is, around the dental elements 20 and the parts which have been formed in the connecting channels 22 and the press opening 24, is cut away or otherwise removed, for instance by blasting. After this, the dental elements can be detached, for instance by sawing them off, and be finished.

The cuvette 12 comprises, in the bottom 54 on opposite sides of the opening 56, a first slot 58, which is open in (in Fig. 2) downward direction and at least to one side of the cuvette 12, such that a cuvette fork, known per se, can be moved into it for taking up the cuvette 12. In addition, on opposite sides of the cuvette 12 in the wall 18 there is provided a second slot 60, open towards the side, in which cuvette tongs, known per se, can be moved, likewise for manipulating the cuvette 12. The stamp 28, on the side extending into the press opening 24 during use, is provided with a beveled edge, which makes for optimum application of pressure to the pressure molding material 30, so that this can be forced into the mold cavities 20 still better.

Preferably used as refractory material for manufacturing the mold is a material having a relatively high percentage by weight of filler, held together by a binder. Used as filler are, for instance, quartz, aluminum oxide and the like or a mixture thereof, while the stamp is preferably manufactured from the same material. Used as binder in this connection is, for instance, MgO NH₄ H₂ PO₄. The refractory material consists, for instance, of 60 to 85% of filler and 15 to 40% of binder. Preferably, between 70 and 80% of filler is used, supplemented to 100% with binder. The refractory material is degassed prior to the filling of the mold, in order to prevent undesired chemical reactions such as oxidation, and to obtain a sufficient density.

Used as pressure molding mass is material having sufficient flow properties at elevated temperature for it to be pressed into the cavities, while after cooling it forms a hard and smooth mass that still allows of finishing, for instance grinding and coloring. Thus, for instance, a pressure molding mass is used which comprises between 40 and 85 percent by weight of SiO₂, preferably between 50 and 70%, supplemented with a mixture of a number of other components, in particular oxides, such as, for instance, Al₂O₃, K₂O, Na₂O, Li₂O, BaO, CaO, B₂O₃, F₂, P₂O₅. Found to be particularly advantageous is the use of a pressure molding mass substantially consisting of, at least having the properties of, silicate glass.

As appears clearly from the description, in a method according to the invention, the stamp is, for instance, at least partly manufactured such that, in principle, it is used only a single time and is lost together with the mold. Thus, no problems of wear occur, and costly cleaning operations can be omitted. In the embodiment shown, the stamp is made of massive design. It will be clear, however, that it may also be made of hollow design, so that it can be mounted with a proper fit on the free end of the press arm. The degree of filling of the mold cavities can be determined, for instance, on the basis of the displacement of the stamp, so that in each case the proper filling and squeeze pressure can be obtained.

It will be clear that such a pressing stamp can also be used in a combined press oven of a known type. Because the press opening is closed off by the stamp, any pressing direction can be chosen. In principle, the cuvette can also be placed in a pressing device with its bottom on the side or with its bottom up.

The invention is not limited in any way to the exemplary embodiments represented in the description and the drawing. Many variations thereof are possible within the framework of the invention outlined by the claims.

Thus, for instance, a different type of press can be used, for instance one in which a piston-cylinder assembly is connected directly with the press arm, or in which use is made of an eccentric pressing mechanism or the like. Also, use can be made of manual pressing means, such as suitable tongs or the like. Further, other compositions of pressure molding material and/or refractory mass can be used, as long as the pressure molding material can be forced into the mold cavity by the pressing means mentioned. A different number of mold cavities can be provided in the mold, which may be connected with a press opening in a different way, for instance with several press openings provided for different mold cavities, with a multiple stamp. If the refractory mass has sufficient inherent strength to take up occurring internal pressure, the mold can also be used without cuvette. Obviously, the cuvette can also be designed differently, depending, for instance, on the elements to be formed . Also, the dental elements may be designed differently, for instance provided with other fastening means, which, for instance, may also be included as inserts in the mold, so that they will be enclosed at least partly by the pressure molding material.

## Claims

1. A method for pressure molding a dental element, in particular a denture element, comprising the following steps:
- manufacturing at least one model of an element to be formed, of the lost type;
- making a mold from refractory material around the at least one model;
- heating the refractory material, such that the or each model is lost, thereby forming a mold cavity for the or each model, a press opening and one or more connecting channels between the or each mold cavity and the press opening;
- introducing into the press opening pressure molding material which is brought into liquid, at least pressable, condition and is pressed by means of pressing means into the or each mold cavity;
- wherein the pressing means comprise a stamp with a coefficient of expansion substantially corresponding to that of the refractory material.

2. A method according to claim 1, wherein during pressing the stamp extends at least partly into the press opening and is formed from a refractory mass comparable to and preferably the same as that from which the mold is formed.

3. A method according to claim 1 or 2, wherein the refractory mass for the mold is introduced into a cuvette, which cuvette is manufactured from substantially non-oxidizing material, in particular metal.

4. A method according to claim 3, wherein the mass is introduced into a cuvette which is manufactured from a nickel-chromium alloy or an alloy having a comparable resistance to oxidation at elevated temperature.

5. A method according to any one of the preceding claims, wherein the mold is formed in a cuvette, while in the cuvette, prior to the introduction of the refractory mass, a compression means is provided, which means is capable of compression during heating and pressing of the pressure molding mass and thus functions as expansion joint.

6. A method according to claim 5, wherein in the cuvette, as compression means, at least a strip of paper or like compressible material is placed.

7. A method according to any one of the preceding claims, wherein the mold is formed in a cuvette slightly tapering inwardly in the direction of a bottom.

8. A method according to any one of the preceding claims, wherein as pressure molding material a mass is used which consists at least partly of glass, in particular silicate glass.

9. A method according to any one of the preceding claims, wherein as pressure molding material a mass is used which consists at least partly of ceramic material.

10. A method according to claims 8 and 9, wherein as pressure molding material a mass is used which comprises between 40 and 85%, in particular between 50 and 75%, and preferably between 50 and 70%, of SiO₂, based on the weight.

11. A method according to any one of the preceding claims, wherein as refractory mass, there is used a mass comprising 60 to 85%, more particularly 70 to 80%, of filler such as quartz and aluminum oxide, and 15 to 40%, more particularly 20 to 30%, of binder such as MgO NH₄ H₂ PO₄.

12. A method according to any one of the preceding claims, wherein prior to the introduction of the pressure molding material the refractory mass is densified and degassed.

13. A method according to any one of the preceding claims, wherein after pressing of the pressure molding material, when removing the mold from the pressing means, at least a part of the stamp is left behind in the mold, in particular in the press opening, and is substantially lost upon removal of the at least one dental element from the mold.

14. A method according to any one of the preceding claims, wherein for heating at least the mold, use is made of an oven, in which the mold is placed, while for pressing use is made of a press arranged separately from the oven.

15. An assembly for pressure molding a dental element, comprising pressing means, a cuvette and refractory material for forming a mold in the cuvette, while modeling means of the lost type are provided, in particular wax, for forming a model of the dental element to be formed, while the pressing means comprise a stamp which is at least partly manufactured from a material having a coefficient of expansion substantially corresponding to that of the refractory material.

16. An assembly according to claim 15, wherein the stamp is at least partly manufactured from the same material as the refractory mass.

17. An assembly according to claim 15 or 16, wherein the cuvette is made of clearing design, in particular so as to taper inwardly in the direction of a bottom.

18. An assembly according to any one of claims 15-17, wherein the stamp is at least partly manufactured from refractory mass.

19. An assembly according to any one of claims 15-18, wherein the cuvette is manufactured from substantially non-oxidizing material, in particular a Ni-Cr alloy.

20. An assembly according to any one of claims 15-19, wherein further a compressible element is provided which is placeable on the inside of the cuvette during use, between the wall of the cuvette and the refractory mass.

21. An assembly according to claim 20, wherein the stamp is designed such that it is at least partly lost along with the refractory material upon removal of the or each dental element from the mold.

22. A cuvette for use in pressure molding a dental element from ceramic material, wherein the cuvette is manufactured from a material substantially non-oxidizing at a temperature needed for melting the ceramic material, in particular a Ni-Cr alloy.

23. Use of a cuvette manufactured from a material substantially non-oxidizing at a temperature needed for melting ceramic material, in particular a Ni-Cr alloy, for pressure molding an at least partly ceramic dental element in a mold manufactured from a refractory material in said cuvette.
